# EUROPEAN PATENT APPLICATION

(11) **EP 4 327 665 A1**
(43) Date of publication of application: **28.02.2024**
(21) Application number: 22191996.2
(22) Date of filing: 24.08.2022
(51) Int. Cl.: A23D 9/007, A23D 9/04, A23L 33/115, A23L 33/12, A23L 33/135, C11C 3/00

(54) **SOLIDIFIED OIL PREPARATIONS**

(71) Applicant: AB Enzymes GmbH, 64293 Darmstadt (DE)
(72) Inventor: The designation of the inventor has not yet been filed
(74) Representative: Altmann Stößel Dick Patentanwälte PartG mbB

(57) **Abstract**

The present invention relates to a method of producing a solidified oil preparation from an oil preparation, comprising (a) contacting said oil preparationto a solidifier composition comprising at least one microorganism, and (b) obtaining the solidified oil preparation produced in step (a). The present invention further relates to a solidified oil preparation obtained or obtainable according to the aforesaid method, and to consumables, microorganisms, and lipases related thereto.

## Description

The present invention relates to a method of producing a solidified oil preparation from an oil preparation, comprising (a) contacting said oil preparation to a solidifier composition comprising at least one microorganism, and (b) obtaining the solidified oil preparation produced in step (a). The present invention further relates to a solidified oil preparation obtained or obtainable according to the aforesaid method, and to consumables, microorganisms, and lipases related thereto.

Microorganisms have been used for centuries in food applications to produce fermented foods, where microbial growth can improve properties like texture, taste, and nutrient value, may provide for preservation, or may contribute health benefits or other improvements. Traditionally, microorganisms which are part of the natural flora of the food to process or of the flora of the processing environment were used to start microbial fermentation, e.g. in cheese, bread, pickle, and wine production (Bourdichon et al., Bulletin of the International Dairy Federation 495/2018, Ribes et al. (2018), Crit Rev Food Sci Nutr 58(12):2002). In contrast, e.g. in olive oil production, it was found that microbes of the natural olive flora may survive or even proliferate, however, were assumed to not affect oil quality, composition and hygiene (Koidis et al. (2008), Eur J Lipid Sci Technol 110:164); also, a sediment from olive oil production known as "Amoredj" is known to contain lactic acid bacteria (S. Brahmini, Master Thesis at the Oran University, Algeria, 2015). Guan et al. (2020), AMB Expr 10, Art. No:91 reported isolation of Lactobacillus spec. with lipolytic activity; microbial lipases have been reviewed e.g. by Chandra et al. (2020), Microb Cell Fact 19:169, and lipid metabolism in rumen was reviewed e.g. by Jarvis and Moore (Timmis (ed), Handbook of Hydrocarbon and Lipid Microbiology, Springer Verlag Berlin Heidelberg 2010).

In modern industrial settings, typically starter cultures comprising defined microorganisms or mixtures thereof are used to reduce processing times and to prevent malfermentations. Use of starter cultures is industrial standard e.g. in production of breads, dairy products, cheeses, beer and other food products which are produced at high amounts and where processing time and quality is critical. However, use of microorganisms in industrial modification of other food products was attempted as well.

In many traditional food fermentations, the microorganisms used for fermentation contribute also to taste and texture of the fermented food, e.g. in dairy applications such as cheese and butter making or in beverage, e.g. beer, production. However, microorganisms have also been used for producing texturizing agents as such for further use in food industry; e.g. WO 2019/235761 A1 describes production of a fermented emulsifier; and US 5,989,892 A describes production of an emulsifier by Alteromonas or Rhodococcus cells.

There is, nonetheless, a need for improved means and methods for producing or improving consumables like foodstuff and/or feed, by microbial fermentation. This problem is solved by the means and methods disclosed herein and in particular by the embodiments characterized in the claims and described herein below.

In accordance, the present invention relates to a method of producing a solidified oil preparation from an oil preparation, comprising
(a) contacting said oil preparation to a solidifier composition comprising at least one microorganism, and
(b) obtaining the solidified oil preparation produced in step (a).

In general, terms used herein are to be given their ordinary and customary meaning to a person of ordinary skill in the art and, unless indicated otherwise, are not to be limited to a special or customized meaning. As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements. Also, as is understood by the skilled person, the expressions "comprising a" and "comprising an" preferably refer to "comprising one or more", i.e. are equivalent to "comprising at least one". In accordance, expressions relating to one item of a plurality, unless otherwise indicated, preferably relate to at least one such item, more preferably a plurality thereof; thus, e.g. identifying "a cell" relates to identifying at least one cell, preferably to identifying a multitude of cells.

Further, as used in the following, the terms "preferably", "more preferably", "most preferably", "particularly", "more particularly", "specifically", "more specifically" or similar terms are used in conjunction with optional features, without restricting further possibilities. Thus, features introduced by these terms are optional features and are not intended to restrict the scope of the claims in any way. The invention may, as the skilled person will recognize, be performed by using alternative features. Similarly, features introduced by "in an embodiment" or similar expressions are intended to be optional features, without any restriction regarding further embodiments of the invention, without any restrictions regarding the scope of the invention and without any restriction regarding the possibility of combining the features introduced in such way with other optional or non-optional features of the invention.

The methods specified herein below, preferably, are in vitro methods. The method steps may, in principle, be performed in any arbitrary sequence deemed suitable by the skilled person, but preferably are performed in the indicated sequence; also, one or more, preferably all, of said steps may be assisted or performed by automated equipment. Moreover, the methods may comprise steps in addition to those explicitly mentioned above. The methods may be performed at any scale deemed appropriate by the skillet person, i.e. preferably at laboratory scale, pilot scale, or industrial scale.

As used herein, the term "standard conditions", if not otherwise noted, relates to IUPAC standard ambient temperature and pressure (SATP) conditions, i.e. preferably, a temperature of 25°C and an absolute pressure of 100 kPa; also preferably, standard conditions include a pH of 7. Moreover, if not otherwise indicated, the term "about" relates to the indicated value with the commonly accepted technical precision in the relevant field, preferably relates to the indicated value ± 20%, more preferably ± 10%, most preferably ± 5%. Further, the term "essentially" indicates that deviations having influence on the indicated result or use are absent, i.e. potential deviations do not cause the indicated result to deviate by more than ± 20%, more preferably ± 10%, most preferably ± 5%. Thus, "consisting essentially of' means including the components specified but excluding other components except for materials present as impurities, unavoidable materials present as a result of processes used to provide the components, and components added for a purpose other than achieving the technical effect of the invention. For example, a composition defined using the phrase "consisting essentially of' encompasses any known acceptable additive, excipient, diluent, carrier, and the like. Preferably, a composition consisting essentially of a set of components will comprise less than 5% by weight, more preferably less than 3% by weight, even more preferably less than 1% by weight, most preferably less than 0.1% by weight of non-specified component(s).

The term "oil" is, in principle, understood by the skilled person to relate to a composition consisting to at least 90% (w/w) of hydrophobic organic compounds and being liquid at at most 28°C, more preferably at 25°C, still more preferably at 20°C, even more preferably at 15°C, most preferably at 10°C. In accordance, the term oil preferably includes the fat portion comprised in an oil in water emulsions, i.e. the above determination whether an oil is liquid at a certain temperature is preferably made on a preparation comprising less than 10% non-hydrophobic compounds, in particular water. Preferably, determining whether a composition is liquid is performed by transferring said composition into a new container at the given temperature, and determining that said composition is a liquid in case the composition assumes the shape of the new container within at most one minute. Preferably, the oil comprises, more preferably consists of, at least one oil produced by a non-mammalian, preferably eukaryotic, organism or is a mixture thereof. Also preferably, the oil is not comprised in milk or a product thereof. Thus, preferably, the oil does not comprise a mineral oil and/or is not a milk-derived oil. The oil preferably comprises at least 90% (w/w), more preferably at least 95% (w/w), still more preferably at least 98% (w/w), most preferably at least 99% (w/w) lipids as specified herein below. Also preferably, the oil comprises at least 70% (w/w), more preferably at least 85% (w/w), even more preferably at least 90% (w/w), still more preferably at least 95% (w/w), most preferably at least 97% (w/w) triglycerides. Preferably, the oil is a vegetable oil, a fish oil, an algae oil, a microbial oil, an animal oil, or a mixture of any of the aforesaid, preferably is a vegetable oil or a fish oil, more preferably is a vegetable oil or a mixture of vegetable oils. Preferably, the oil is wheat germ oil, almond oil, apple seed oil, apricot kernel oil, avocado seed oil, beech nut oil, brazil nut oil, canola oil, cashew oil, castor oil, chia seeds oil, cocoa butter oil, coconut oil, corn oil, cottonseed oil, flaxseed oil, grape seed oil, grapefruit seed oil, hazelnut oil, hemp seed oil, lemon seed oil, linseed oil, macadamia oil, millet seed oil, mongongo nut oil, mustard oil, olive oil, orange seed oil, palm oil, peanut oil, pear seed oil, pecan oil, perilla oil, pine nut oil, pistachio oil, pumpkin seed oil, rapeseed oil, rice bran oil, rye germ oil, safflower oil, sesame oil, soybean oil, spelt germ oil, sunflower oil, vigna mungo bean oil, walnut oil, or a mixture of any of the aforesaid. More preferably, the oil is soybean oil, sunflower oil, rapeseed oil, canola oil, corn oil, or wheat germ oil, or a mixture of any of the aforesaid. Thus, the oil preferably is a product from an oil-rich plant part. Preferably, the oil is a cold-pressed oil, a hot-pressed oil, or an extracted oil, more preferably is a cold-pressed oil. Preferably, the oil is a food grade and/or feed grade oil, a cosmetics grade oil, and/or a pharmaceutical grade oil, more preferably is a food grade and/or feed grade oil. The oil may be a crude oil, an unclarified oil, a clarified oil, a filtered oil, a refined oil, or a mixture of the aforesaid. Preferably, at least 50%, more preferably at least 60%, still more preferably at least 70%, most preferably at least 75% of the fatty acids comprised in an oil as specified herein are unsaturated fatty acids, preferably as specified herein below. Also preferably, at least 90%, more preferably at least 95%, still more preferably at least 98% of the fatty acids comprised in an oil are present in an esterified form, preferably comprised in triglycerides as specified herein below. More preferably, at least 85%, more preferably at least 90%, still more preferably at least 95% of the fatty acids comprised in an oil are comprised therein as triglycerides as specified herein below. Preferably, the oil comprises up to 1% (w/w), preferably up to 0.75% (w/w), more preferably up to 0.5%% (w/w) water; preferably, the oil comprises of from 0.01% (w/w) to 1% (w/w) water, more preferably of from 0.05% (w/w) to 0.5% (w/w) water.

The term "lipid" is understood by the skilled person; as used herein, the term preferably relates to lipophilic organic compounds, preferably having a logarithmic octanol/water partition coefficient (log Po/w) of at least 0, preferably at least 1, more preferably at least 2, still more preferably at least 3, and/or preferably comprised in an oil and/or in an oil preparation. As used herein, a compound is deemed to have a log Po/w of the indicated value if there is at least one molecular species having the specified log Po/w present at the pH of the oil preparation, more preferably at a pH of 5; more preferably, a compound is deemed to have a log Po/w of the indicated value if there is at least one molecular species having the specified log Po/w present at a fraction of at least 1% of all molecular species of said compound at the pH of the oil preparation, more preferably at a pH of 5. Preferably, the pH of an oil or oil preparation comprising at least 90% lipids is measured by pH titration in the presence of an appropriate pH indicator compound. As the skilled person understands, such lipophilic molecular species, even if present as a small fraction in an aqueous solution, will become continuously extracted into the oil phase of an oil preparation and thus removed from the equilibrium. As a non-limiting example, propionic acid, at the pH of a typical oil, will be present as (undissociated) propionic acid and as (dissociated) propionate molecules; since the molecular species propionic acid has a log Po/w of 0.33, it is a lipophilic compound as referred to herein. The lipid composition of a composition such as an oil can be established by the skilled person by well-established methods. Preferably, the lipid comprises, preferably is, a fatty acid, a mono-, di-, or a triglyceride, an essential oil, a carotenoid, a plant secondary metabolite, a phenolic compound, or an organic acid. As used herein, the term lipid includes lipophilic compounds present in the oil or oil preparation before admixture of the microorganism, i.e. animal- or plant-produced lipids, but also includes lipophilic compounds produced by the microorganism in the solidified oil preparation. In contrast, the term "oil lipid" is used specifically for lipophilic compounds present in the oil or oil preparation as provided, whereas the term "fermentation lipid" is used specifically for lipophilic compounds produced by the microorganism in the oil preparation. Thus, the oil lipid preferably comprises, preferably is, a fatty acid, a mono-, di-, or triglyceride, an essential oil, a carotenoid, a plant secondary metabolite, a phenolic compound, or an organic acid; also preferably, the fermentation lipid is a fatty acid, a mono-, or diglyceride, or an organic acid. Also, the fermentation lipid may be a compound de novo produced by the microorganism. The above applies mutatis mutandis to amphiphilic compounds and fats. Preferably, the fermentation lipid is a fat. In concurrence with the above, the term "fat" is, in principle, understood by the skilled person to relate to a composition consisting to at least 80% (w/w) of hydrophobic organic compounds, preferably lipids, and being solid at at least 10°C, more preferably at 15°C, still more preferably at 20°C, even more preferably at 25°C, most preferably at 28°C. The composition of the fat may essentially be similar to that of the oil as described herein above, however, preferably with an increased degree of saturation of fatty acids comprised in the hydrophobic organic compounds. Preferably, the fat is a fermentation fat, i.e. is produced by the microorganism during the contacting step.

The term "amphiphilic compound" is understood by the skilled person to relate to a compound having hydrophilic and lipophilic substructures: preferably, the lipophilic compound has an overall extended structure and a hydrophilic end and a lipophilic end. In accordance with the above, the term "oil amphiphile" is used herein for an amphiphilic compound present in the oil and/or the oil preparation, while the term "fermentation amphiphile" is used specifically for amphiphilic compounds produced by the microorganism in the oil preparation. The fermentation amphiphile preferably is a surfactant and preferably has the activity of being a detergent, an emulsifier, a foaming agent, or a dispersant. Thus, preferably, the microorganism produces at least one fermentation lipid and/or at least one fermentation amphiphile in the fermented oil preparation.

As used herein, the term "fatty acid", unless otherwise indicated, may relate to a non-esterified fatty acid, i.e. preferably to a free fatty acid, or to an esterified fatty acid, comprised in e.g. a mono-, di-, or a triglyceride or a phospholipid. For non-esterified fatty acids, the term "free fatty acid" is used herein and esterified fatty acids are referred to as "esterified fatty acids". Preferred fatty acids are naturally occurring fatty acids, preferably with an even number of carbon atoms. Preferably, the fatty acid comprises at least 8, more preferably at least 10, still more preferably at least 12 carbon atoms, more preferably of from 12 to 26, even more preferably of from 12 to 24, most preferably of from 12 to 18 carbon atoms. Preferably, the fatty acids referred to herein are free fatty acids or fatty acids comprised in mono-glycerides. Fatty acids may be straight-chain molecules or branched molecules, preferably are straight-chain molecules. Preferably, the fatty acid is an unsaturated fatty acid (UFA), i.e. a fatty acid comprising at least one C=C double bond in the carbon chain; more preferably the UFA is selected from the list consisting of 12:1, 12:2, 12:3, 14:1, 14:2, 14:3, 16:1, 16:2, 16:3, 18:1, 18:2, 18:3, 18:4, 20:1, 20:2, 20:3, 20:4, 20:5, 22:1, 22:2, 22:3, 22:4, 22:5, 22:6, 24:1, 24:2, 24:3, 24:4, 24:5, 24:5, 24:6 fatty acids, wherein, according to standard convention, the first number indicates the number of carbon atoms in the fatty acid, and the second number indicates the number of double bonds (unsaturated bonds). As will be understood by the skilled person from the above, the term UFA includes polyunsaturated fatty acids. Preferably, the fatty acid is a polyunsaturated fatty acid (PUFA), i.e. a fatty acid comprising at least two C=C double bonds in the carbon chain; more preferably the PUFA is selected from the list consisting of 12:2, 12:3, 14:2, 14:3, 16:2, 16:3, 18:2, 18:3, 18:4, 20:2, 20:3, 20:4, 20:5, 22:2, 22:3, 22:4, 22:5, 22:6, 24:2, 24:3, 24:4, 24:5, 24:5, 24:6 fatty acids. Also preferably, the PUFA is an omega-3, or an omega-6 unsaturated fatty acid. Also preferably, the PUFA is an omega-6, or an omega-9 unsaturated fatty acid.

The terms "monoglyceride", "diglyceride" and "triglyceride" are understood by the skilled person to relate to a compound comprising a glycerol molecule esterified to one, two, or three fatty acid(s), respectively. Preferably, the esterified fatty acid(s) in the mono-, di- and triglycerides are independently selected from the fatty acids as specified herein above.

The term "oil preparation", as used herein, relates to any composition of matter consisting with a proportion of at least 10% (w/w), preferably at least 20% (w/w), more preferably at least 50% (w/w), still more preferably at least 75% (w/w), of an oil or a mixture of oils as specified herein above. Also preferably, the oil preparation comprises at most 99.5% (w/w), more preferably at most 99% (w/w), still more preferably at most 98% (w/w), even more preferably at most 95% (w/w), most preferably at most 90% (w/w) of an oil or a mixture of oils as specified herein above. Preferably, the oil preparation is liquid at a temperature of 20°C, preferably under standard conditions, more preferably the oil preparation is liquid at a temperature of 15°C, still more preferably at a temperature of 10°C, most preferably at a temperature of 5°C. As will be understood by the skilled person, the oil preparation, while being liquid at 20°C, may be processed at a different temperature, in particular a higher temperature, such as 30°C or 40°C; preferably, the oil preparation is processed at a temperature at which it is liquid. The oil preparation may comprise solid constituents, e.g. plant parts, i.e. the oil preparation may be a suspension, e.g. a slurry. Preferably, the oil preparation comprises less than 10% (w/w), preferably less than 1% (w/w), more preferably less than 0.1% (w/w), even more preferably less than 0.1% (w/w) milk lipid; most preferably, the oil preparation does not contain milk lipid. Also preferably, the oil preparation comprises less than 10% (w/w), preferably less than 1% (w/w), more preferably less than 0.1% (w/w), even more preferably less than 0.1% (w/w) animal lipid; most preferably, the oil preparation does not contain animal lipid. Further preferably, the oil preparation comprises less than 10% (w/w), preferably less than 1% (w/w), more preferably less than 0.1% (w/w), even more preferably less than 0.1% (w/w) milk protein; most preferably, the oil preparation does not contain milk protein. Also preferably, the oil preparation comprises less than 10% (w/w), preferably less than 1% (w/w), more preferably less than 0.1% (w/w), even more preferably less than 0.1% (w/w) animal protein; most preferably, the oil preparation does not contain animal protein. The oil preparation, in particular an oil preparation comprising fish oil, preferably does not comprise added salt, in particular no added NaCl. Preferably, the oil preparation is not, more preferably does not comprise, coconut oil, palm fruit oil, palm kernel oil, and/or coconut butter. Preferably, the oil preparation comprises at least 50%, more preferably at least 75%, even more preferably at least 85%, most preferably at least 90% oil as specified herein above, preferably vegetable oil as specified herein above. Most preferably, the oil preparation is an oil, preferably a vegetable oil or a mixture of vegetable oils, as specified herein above. Preferably, the oil preparation is liquid under the conditions applied to the oil preparation in step a) specified herein above and/or during an optional incubation step. The oil preparation may comprise any additional compounds deemed appropriate by the skilled person, preferably one or more compounds selected from compounds such as water, buffers, emulgators, thickening agents, processing aids, organic solvents, solid constituents, and the like. In a preferred embodiment, the oil preparation may comprise one or more additional ingredients sustaining growth of the microorganism, e.g. mineral salts, essential nutrients, buffering compounds, nitrogen sources, and the like. The additional components are preferably selected such as to not interfere with the activity of the microorganism, more preferably with the viability of the microorganism. Preferably, in particular in case the oil preparation is a food- and/or feed-grade oil preparation and/or the solidified oil preparation is intended for food- or feedstuff production, the oil preparation is an educt, an intermediate, or a product of oil production. Preferably, the oil preparation is a vegetable oil preparation, a fish oil preparation, an algae oil preparation, a microbial oil preparation, or an animal oil or fat preparation, preferably is a vegetable oil preparation or a fish oil preparation, more preferably is a vegetable oil preparation, preferably is a processing product from an oil-rich plant part. Also preferably, the oil preparation comprises a crude oil, an unclarified oil, a clarified oil, a filtered oil, a refined oil, an oil-rich plant part, an oil sediment, an oil meal, or a presscake. Preferably, the oil preparation is a food grade and/or feed grade oil preparation. Preferably, the oil preparation does not comprise a mineral oil.

In view of the description herein, the skilled person understands that depending on the water:oil ratio present in the oil preparation, the oil preparation may be an oil comprising dissolved amounts of water. More preferably, the oil preparation comprises water at an amount exceeding the solubility in the respective oil or mixture thereof comprised in the oil preparation. Thus, the oil preparation preferably is a two-phase system comprising an oil phase and an aqueous phase.

The term "solidified oil preparation", as used herein, relates to an oil preparation to which a microorganism was admixed and wherein said admixing caused a detectable change, i.e. increase or decrease, of concentration of at least one constituent of said oil preparation, wherein the change of the concentration of a constituent includes presence of at least one new constituent not present in said oil preparation, and/or the absence of at least one constituent present in said oil preparation, and which has become solidified; the term "solidified" is understood by the skilled person and preferably relates to a fermented oil preparation or a fraction thereof which has changed from a liquid state to a semisolid or solid state during the contacting step as described elsewhere herein. Preferably, an oil preparation is solidified if, after transfer to a new container, it does not assume the shape of said new container within 10 min after said transfer, preferably under standard conditions. In accordance, the solidified oil preparation preferably comprises at least one constituent in a detectably changed concentration and/or comprises at least one fermentation lipid as specified herein above. The aforesaid detectable change causes (i) emulgation of oil(s) comprised in the solidified oil preparation in aqueous constituents of the solidified oil preparation, (ii) emulgation of aqueous constituents comprised in the solidified oil preparation in oil(s) of the solidified oil preparation, (iii) an increase in viscosity in the solidified oil preparation, (iv) production of an oleogel, (v) production of a solid or semisolid interphase between the oil phase and the aqueous phase of the solidified oil preparation, (vi) saturation of unsaturated fatty acids comprised in the oil preparation, and/or (vii) production of at least one wax. The term "wax" is understood by the skilled person; preferably, the term relates to esters of long-chain fatty acids with long-chain alkohols, preferably with a melting point of at least 40°C. The solidified oil preparation may comprise an emulsion, a diacylglyceride, a monoacylglyceride, an oleogel, a fat, and/or a wax not present in the oil preparation. Thus, the oil phase and/or an interphase potentially present in the solidified oil preparation preferably are used in applications of the solidified oil preparation. Preferably, the aforesaid emulsion is an oil-in-water emulsion or a water-in-oil emulsion. Also preferably, the solidified oil preparation is a food grade and/or feed grade solidified oil preparation.

Preferably, the solidified oil preparation comprises at least one diacylglyceride and/or at least one monoacylglyceride as fermentation lipid(s) or fermentation amphiphile(s), i.e. as compounds newly produced or increased in concentration over the concentration in the oil preparation from constituents of said oil preparation by the action of the microorganism; the solidified oil preparation may further comprise at least one free fatty acid, preferably comprises a multitude of free fatty acids. Thus, the microorganism preferably produces at least one lipase, preferably at least one fatty acid glycerol ester hydrolase, more preferably at least one triacylglycerol acylhydrolase (EC 3.1.1.3) and/or at least one diacylglycerol acylhydrolase (diacylglycerol lipase, EC 3.1.1.34). As the skilled person understands in light of the description herein, mono- and diacylglycerides, as well as free fatty acids may function as emulgators contributing to emulsion formation and stabilization. Method for determining propensity of emulsion formation and emulsion stability are known in the art, e.g. interfacial tension measurements e.g. by force tensiometry.

Also preferably, the viscosity of the solidified oil preparation is increased by a factor of at least 2, preferably at least 3, more preferably at least 4, preferably compared to the oil preparation used as an educt in the method; thus, preferably, the microorganism causes the viscosity of the oil preparation to increase during the contacting step by a factor of at least 2, preferably at least 3, more preferably at least 4, preferably compared to the oil preparation used as an educt in the method. As the skilled person understands in light of the description herein, an increase in viscosity increases shearing forces in an oil preparation and may thus contribute to emulsion formation and stabilization. Methods for determining viscosity in a liquid or semisolid composition of matter are known in the art, e.g. rheometry. As the skilled person understands, for comparison purposes the viscosity of the solidified oil preparation and of the oil preparation used as an educt in the method is measured by the same method and under the same conditions.

The method described herein may be performed under any aeration intensity deemed appropriate by the skilled person, Preferably, contacting step (a) is performed under microaerobic or anaerobic conditions at least for a part of it duration. The terms "microaerobic" and "anaerobic" are known to the skilled person to relate to a reduced oxygen tension or absence of oxygen, respectively. Thus, microaerobic conditions preferably comprise an oxygen tension of less than 10%, preferably less than 5%, in the headspace of the container in which the contacting is performed; thus, the oxygen tension preferably is of from 0.01% to 10%, more preferably of from 0.01% to 5%. Also, anaerobic conditions preferably comprise that oxygen is essentially absent from the headspace of the container in which the contacting is performed. Thus, anaerobic conditions may comprise the presence of trace amounts of oxygen, e.g. less than 0.01%. Anaerobic conditions which require absence of detectable amounts of oxygen would be referred to as "strictly anaerobic".

The term "solidifier composition", as used herein, includes any solid, semisolid, or liquid compositions of matter comprising the indicated compound(s); thus, the solidifier composition comprises at least the microorganism as specified. The solidifier composition may comprise any additional compounds deemed appropriate by the skilled person, preferably one or more compounds selected from compounds such as water, buffers, emulgators, thickening agents, processing aids, organic solvents, solid constituents, and the like. Preferably, the solidifier composition comprises one or more additional ingredients sustaining growth of the microorganism, e.g. mineral salts, essential nutrients, buffering compounds, nitrogen sources, and the like. Thus, the solidifier composition may comprise a nutrient medium, wherein said nutrient medium preferably comprises, more preferably consists of, water, a nitrogen source, a sulfur source, a phosphate source, an iron source, essential salts, and optionally at least one source of vitamins and/or other nutrients. Preferably, said nitrogen source is an organic nitrogen source, preferably a protein hydrolysate. Also preferably, a protein hydrolysate may be included as a nitrogen source and as a sulfur source in said nutrient medium. Also preferably, a yeast extract is provided as the source of vitamins and/or as the nitrogen source. The additional components are preferably selected such as to not interfere with the activity of the microorganism, more preferably with the viability of the microorganism. In view of the description herein, the skilled person understands that additional components desired to be included in the contacting step may be admixed to an oil or mixture of oils before adding the microorganism; such additional components may, however, also be provided as an admixture comprising the microorganism and be admixed to the oil preparation before step (a). Thus, the solidifier composition may e.g. be a pre-culture of at least one microorganism, which may be diluted e.g. in growth medium before the contacting step.

The term "microorganism" is known in the art. Preferably, the term relates to any, preferably unicellular, organism which is not discernible to the naked eye. Preferably, the microorganism is a bacterium or a fungus, more preferably a bacterium or a yeast. The microorganism may be an aerobic or facultative organism, in particular in case it is a fungus, e.g. a yeast. Preferably, the microorganism is an anaerobic, microaerophilic, or facultative microorganism. Preferably, the microorganism produces at least one diacylglyceride and/or at least one monoacylglyceride from constituents of the oil preparation, preferably from triglycerides and/or diglycerides comprised therein. Thus, the microorganism preferably produces at least one lipase, preferably at least one glycerol ester hydrolase, more preferably at least one triacylglycerol acylhydrolase and/or at least one diacylglycerol acylhydrolase, as specified herein above. Also preferably, the microorganism causes the viscosity of the oil preparation to increase during the contacting step by a factor of at least 2, preferably at least 3, more preferably at least 4, preferably compared to the oil preparation used as an educt in the method. Also preferably, the microorganism is a lactic acid bacterium or a yeast. Also preferably, the microorganism is a food- and/or feed-grade microorganism. As used herein, the term "food-grade" relates to a compound or organism being safe for human consumption. Databases of food-grade compounds and organisms are available to the skilled person. The above applies mutates mutandis to the term "feed-grade", which relates to a compound or composition being safe for animal consumption, i.e. for use as feed. For the avoidance of doubt, compositions generally referred to as "pet food" are comprised in the term "feed" as used herein. As used herein, a compound or organism being food-grade is deemed feed-grade as well. In accordance with the above, the term "food- and/or feed-grade microorganism" relates to a microorganism, preferably a bacterium or fungus, more preferably a bacterium or a yeast, being safe for human and/or animal consumption, or being safe for use of the production of foodstuffs, beverages or feeds suitable for human or animal consumption, respectively. Preferably the food- and/or feed-grade microorganism is a food-grade microorganism, i.e. has a long demonstrated history of safe use. Preferably, the food- and/or feed-grade microorganism comprises living cells of a food- and/or feed-grade microorganism. Also preferably, the food- and/or feed-grade microorganism comprises inactivated cells of a food- and/or feed-grade microorganism; in such case, the inactivated cells preferably comprise at least one enzyme activity, preferably as specified herein above. Preferably, the food- and/or feed-grade microorganism is a species or strain from as defined and/or as listed in Bourdichon et al., Bulletin of the International Dairy Federation 495/2018, in a preferred embodiment 514/2022 (updates of the Bulletins of the IDF No 377-2002, No 455-2012 and No 495-2018, respectively). In a preferred embodiment, the food- and/or feed-grade microorganism is a microorganism isolated as such from nature, from food, or feed, i.e. a microorganism occurring naturally in at least one of said habitats.

Preferably, the microorganism is a bacterium, more preferably a strain from a Lactobacillus spp. or Lentilactobacillus spp. Also preferably, the microorganism is a eukaryotic organism, preferably a fungus, in particular a yeast, more preferably a strain from a Nakazawea spp. More preferably, the microorganism is a strain of Lentilactobacillus parabuchneri, a strain of Lactobacillus johnsonii, or a strain of Nakazawea molendinolei. Most preferably, the microorganism is Lentilactobacillus parabuchneri LCT659, deposited at the DSMZ under accession number DSM 34334 on 22 July 2022, Lentilactobacilllus parabuchneri LTC 403, deposited at the DSMZ under accession number DSM 34333 on 21 July 2022, Lactobacillus johnsonii LCT 986, available at the DSMZ under accession number DSM33691, deposited 12 November 2020, or Nakazawea molendinolei L115, deposited at the DSMZ under accession number DSM 34335 on 21 July 2022. The address of the DSMZ, i.e. the Leibniz-Institut DSMZ-Deutsche Sammlung von Mikroorganismen und Zellkulturen GmbH, is Inhoffenstr. 7 B, D-38124 Braunschweig, Germany.

The method of producing a solidified oil preparation comprises step (a) contacting the oil preparation to a solidifier composition comprising at least one microorganism.

The term "contacting", as referred to herein, is understood by the skilled person. Preferably, the term relates to bringing the indicated compounds in physical contact, allowing the compounds to interact. Parameters of said contacting are adjusted by the skilled person taking into account parameters known in the art and described herein elsewhere. E.g. the time range of the contacting may depend on a number of factors, including in particular the amount, preferably the proportion, of microorganism added to the oil preparation, temperature, pH, water activity, agitation, and the like. Preferably, the contacting may be performed for of from 1 hour to 7 days, preferably for of from 2 hours to 4 days, even more preferably of from 3 hours to 2 days. The temperature during contacting is adjusted by the skilled person taking into account e.g. temperature tolerance range and/or temperature optimum of the microorganism, temperature tolerance of desirable compounds comprised in the oil preparation, and the like. Preferably, the contacting is performed at a temperature of from 10°C to 80°C, preferably of from 15°C to 50°C, more preferably of from 20° to 45°C. As the skilled person will understand, the temperature may be kept constant or essentially constant during the contacting. However, also profiles of changing temperatures may be used, e.g. contacting may be performed at a constant temperature, e.g. the optimum temperature of the microorganism, for a first time period, whereafter the temperature may be increased or decreased gradually or stepwise, optionally followed by a second time period of contacting at the new temperature. Preferably, the contacting step comprises agitating the admixture for at least a part of the contacting period, in particular in case the oil preparation is a two-phase system as described herein above. Preferably, agitation comprises stirring at of from 50 to 100 rpm.Thus, production of a solidified oil preparation does not necessarily, however may, require extended periods of incubation and/or agitation. Also, after the contacting step, only a part of the oil preparation contacted to the microorganism may have become solidified, e.g. at least 10% (v/v), preferably at least 25% (v/v), more preferably at least 50%(v/v).

The method of producing a solidified oil preparation comprises step (b) obtaining the solidified oil preparation produced in step (a).

The term "obtaining" is understood by the skilled person to include any and all steps making a product, in particular the solidified oil preparation, available, e.g. for further use. Preferably, the solidified oil preparation obtained is a crude solidified oil preparation. i.e. a solidified oil preparation as it is produced in step (a). However, step (b) may also comprise steps removing fractions of the crude solidified oil preparation, e.g. any aqueous phase and/or oil phase. Also, step (b) preferably comprises at least partially removing the microorganism from the solidified oil preparation, so, as used herein, the term solidified oil preparation also includes the oil preparation after partial or complete removal of the microorganism. Thus, step (b) preferably comprises at least one of decanting, centrifuging, filtering, distilling, and extracting.

The method of producing a solidified oil preparation may comprise further optional steps not expressly described herein; further steps may e.g. relate to further solidifying and/or stabilizing the solidified oil preparation, preparing a consumable comprising the solidified oil preparation, and the like.

Advantageously, it was found in the work underlying the present invention that an oil preparation can be solidified by contacting with a microorganism of the instant invention.

The definitions made above apply mutatis mutandis to the following. Additional definitions and explanations made further below also apply for all embodiments described in this specification mutatis mutandis.

The present invention also relates to a method of producing at least one diacylglyceride and/or at least one monoacylglyceride from an oil preparation, comprising
(a) contacting said oil preparation under microaerobic or anaerobic conditions to a solidifier composition comprising at least one microorganism, and
(b) obtaining the at least one diacylglyceride and/or at least one monoacylglyceride produced in step (a).

The present invention also relates to a method of viscosity of an oil preparation, comprising
(a)contacting said oil preparation under microaerobic or anaerobic conditions to a solidifier composition comprising at least one microorganism, and
(b)obtaining the oil preparation with increased viscosity produced in step (a).

The present invention also relates to a solidified oil preparation obtained or obtainable according to the method of the present invention; properties of said solidified oil preparation at least in part are conferred by the production steps, as specified herein above.

The present invention also relates to a method of producing a consumable selected from the group consisting of a foodstuff, a food supplement, a confectionary, a pet food, a feed, a pharmaceutical or veterinary preparation, a cosmetic preparation, or a precursor of any of the aforesaid, said method comprising admixing a solidified oil preparation produced or producible according to the method of the present invention or a product thereof to said consumable or precursor thereof.

The present invention also relates to a consumable comprising a solidified oil preparation according to the present invention and/or obtained or obtainable by the method of producing a solidified oil preparation according to the present invention.

The term "consumable" is known to the skilled person. Preferably, the term includes any and all compositions of matter which are consumed by humans or animals, be it through consumption, administration to the body, or by other use. Thus, the consumable is preferably selected from the group consisting of a foodstuff, a food supplement, a confectionary, a pet food, a feed, a pharmaceutical or veterinary preparation, a cosmetic preparation, or a precursor of any of the aforesaid. Preferably, the solidified oil preparation modifies at least one physical or chemical property of a consumable, in particular de-mixing properties, e.g. emulsion stability, foaming properties, viscosity, and product consistency, preferably thus providing a stable structure of the consumable, hence e.g. increasing its shelf-life. Preferably, the solidified oil preparation is included as a sensory enhancer, wherein the sensory enhancer preferably modifies at least one of a tactile property, such as crunchiness, fluffiness, chewiness, mouthfeel; an audible property, such as crunching sound or foam sound; or an optical property, such as color and/or volume. Preferably, the solidified oil preparation enhances at least one sensory property of a consumable when present therein, compared to a composition lacking said solidified oil preparation. Thus, the solidified oil preparation may in particular be included in substitute compounds, e.g. compounds usable as a substitute for whipping cream. The solidified oil preparation may, however, also be used as a substitute basis for a known product; e.g. the solidified oil preparation may be used as an educt in soap production or in the production of other detergents.

The present invention also relates to a detergent comprising, preferably consisting of, a solidified oil preparation according to the present invention.

The term "detergent", as used herein, relates to a compound or to a mixture of compounds having amphiphilic properties and lowering surface tension of a liquid comprising them. Thus the term is used in a broad sense and relates to any compounds or mixtures having surfactant properties, wherein the detergent comprises, preferably consists of, a solidified oil preparation.

Preferably, the detergent comprises at least one mono- or diglyceride and/or a fatty acid being a fermentation lipid as specified herein above, or a composition produced therefrom.

The present invention also relates to a microorganism, preferably an isolated microorganism isolated from its natural environment, being Lentilactobacillus parabuchneri LCT659, deposited at the DSMZ under accession number DSM 34334 on 22 July 2022, Lentilactobacilllus parabuchneri LTC 403, deposited at the DSMZ under accession number DSM 34333 on 21 July 2022, Lactobacillus johnsonii LCT 986, available at the DSMZ under accession number DSM33691, deposited 12 November 2020, or Nakazawea molendinolei L115, deposited at the DSMZ under accession number DSM 34335 on 21 July 2022.

As used herein, the term "microorganism" in the context of the strains as specified above relates to bacterial or yeast cells, which may be comprised in any and all preparations deemed appropriate by the skilled person. Preferably, the preparation is a starter culture or a consumable as specified herein above. Preferably, the microorganism is a living microorganism. Also preferably, the microorganism is obtained by and/or maintained by growth in a non-natural growth medium, preferably a medium as specified herein in the Examples.

Further, the present invention relates to a composition comprising at least one microorganism according to the present invention.

The term "composition", as used herein, relates to a composition of matter comprising the compound(s) as specified and optionally one or more acceptable carrier(s). Preferably, the composition is a non-naturally occurring composition. Preferably, the composition is a food- or feed-grade composition; thus, the composition, preferably, comprises the microorganism(s) as specified and the carrier is a food- or feed-grade carrier. The composition may as well comprise further compounds, such as stabilizers, improvers, and the like, all of which, preferably, are food- or feed-grade compounds. The composition preferably comprises viable cells of the microorganism(s) as specified. Thus, preferably, at least 25%, more preferably at least 50%, most preferably at least 75% of the microorganism cells comprised in the composition are viable. Also preferably, the composition comprises each of the indicated microorganism(s) at a viable cell count of at least 10⁶ viable cells/g composition, more preferably at least 10⁸ viable cells/g composition, most preferably at least 10⁹ viable cells/g composition. Thus, the composition may in particular be a lyophilisate of a preparation of the microorganism(s), a starter culture, and/or a solidifier composition as specified herein above.

The present invention further relates to a lipase produced by a microorganism according to the present invention.

The term "lipase" is understood by the skilled person to relate to an enzyme degrading, preferably hydrolyzing, at least one lipid. Preferred lipases are described elsewhere herein; thus the lipase preferably comprises, more preferably is, at least one fatty acid glycerol ester hydrolase, more preferably at least one triacylglycerol acylhydrolase (EC 3.1.1.3) and/or at least one diacylglycerol acylhydrolase (diacylglycerol lipase, EC 3.1.1.34). Methods of identifying lipase activity are known in the art, as are methods for enriching and/or purifying lipases, if desired. Preferably, the lipase is purified to a point where undesirable non-lipase activities possibly present in a composition are removed or reduced to an acceptable level.

The present invention also relates to a use of a microorganism, preferably a microorganism as specified herein above, in the production of a solidified oil preparation; to a use of a microorganism according to the present invention, a composition according to the present invention, and/or a lipase according to the present invention, for hydrolyzing triglycerides, preferably in an oil preparation; and to a use of a microorganism according to the present invention, a composition according to the present invention, and/or a lipase according to the present invention, for increasing viscosity in an oil preparation.

Also, the present invention relates to a method for hydrolyzing a triglyceride, preferably in an oil preparation, comprising
(A) contacting said oil preparation with a microorganism according to the present invention, a composition according to the present invention, and/or a lipase according to the present invention, and
(B) thereby hydrolyzing said triglyceride.

Furthermore, the present invention relates to a method for increasing viscosity in an oil preparation, comprising
(I) contacting said oil preparation with a microorganism according to the present invention, a composition according to the present invention, and/or a lipase according to the present invention, and
(II) thereby increasing viscosity in said oil preparation.

The aforesaid methods are in vitro methods, which may comprise steps in addition to those explicitly mentioned above. Moreover, one or more of said steps may be performed or assisted by automated equipment.

In view of the above, the following embodiments are particularly envisaged:
Embodiment 1: A method of producing a solidified oil preparation from an oil preparation, comprising
   (a) contacting said oil preparation, preferably under microaerobic or anaerobic conditions, to a solidifier composition comprising at least one microorganism, and
   (b) obtaining the solidified oil preparation produced in step (a).
Embodiment 2: The method of embodiment 1, wherein said microorganism is an anaerobic, microaerophilic, or facultative microorganism.
Embodiment 3: The method of embodiment 1 or 2, wherein said microorganism is a bacterium or a yeast, preferably is a bacterium.
Embodiment 4: The method of any one of embodiments 1 to 3, wherein said microorganism produces at least one diacylglyceride and/or at least one monoacylglyceride from constituents of said oil preparation.
Embodiment 5: The method of any one of embodiments 1 to 4, wherein said microorganism causes the viscosity of the oil preparation to increase during said contacting by a factor of at least 2, preferably at least 3, more preferably at least 4, preferably compared to the oil preparation used as an educt in the method.
Embodiment 6: The method of any one of embodiments 1 to 5, wherein said microorganism produces at least one lipase, preferably at least one glycerol ester hydrolase, more preferably at least one triacylglycerol acylhydrolase and/or at least one diacylglycerol acylhydrolase.
Embodiment 7: The method of any one of embodiments 1 to 6, wherein said microorganism is a lactic acid bacterium or a yeast.
Embodiment 8: The method of any one of embodiments 1 to 7, wherein said microorganism is from a genus selected from the list consisting of Lactobacillus, Lentilactobacillus, and Nakazawea.
Embodiment 9: The method of any one of embodiments 1 to 8, wherein said microorganism is Lentilactobacillus parabuchneri LCT659, deposited at the DSMZ under accession number DSM 34334 on 22 July 2022, Lentilactobacilllus parabuchneri LTC 403, deposited at the DSMZ under accession number DSM 34333 on 21 July 2022, Lactobacillus johnsonii LCT 986, available at the DSMZ under accession number DSM33691, deposited 12 November 2020, or Nakazawea molendinolei L115, deposited at the DSMZ under accession number DSM 34335 on 21 July 2022.
Embodiment 10: The method of any one of embodiments 1 to 9, wherein said microorganism is a food- and/or feed-grade microorganism.
Embodiment 11: The method of any one of embodiments 1 to 10, wherein said solidifier composition further comprises a nutrient medium.
Embodiment 12: The method of embodiment 11, wherein said nutrient medium comprises, preferably consists of, water, a nitrogen source, a sulfur source, a phosphate source, an iron source, essential salts, and optionally at least one source of vitamins and/or other nutrients.
Embodiment 13: The method of embodiment 12, wherein said nitrogen source is an organic nitrogen source, preferably a protein hydrolysate.
Embodiment 14: The method of embodiment 13, wherein a protein hydrolysate is said nitrogen source and said sulfur source.
Embodiment 15: The method of any one of embodiments 12 to 14, wherein a yeast extract is provided as the source of vitamins and/or as the nitrogen source.
Embodiment 16: The method of any one of embodiments 1 to 15, wherein said solidified oil preparation comprises an emulsion, a diacylglyceride, a monoacylglyceride, a fat, and/or a wax not present in the oil preparation.
Embodiment 17: The method of embodiment 16, wherein said emulsion is an oil-in-water emulsion or a water-in-oil emulsion.
Embodiment 18: The method of any one of embodiments 1 to 17, wherein said solidified oil preparation is a food grade and/or feed grade solidified oil preparation.
Embodiment 19: The method of any one of embodiments 1 to 18, wherein said oil preparation is a vegetable oil preparation, a fish oil preparation, an algae oil preparation, a microbial oil preparation, or an animal oil preparation, preferably is a vegetable oil preparation or a fish oil preparation.
Embodiment 20: The method of any one of embodiments 1 to 19, wherein said oil preparation is a vegetable oil preparation.
Embodiment 21: The method of any one of embodiments 1 to 20, wherein said oil preparation is wheat germ oil, olive oil, almond oil, avocado seed oil, canola oil, cashew oil, castor oil, coconut oil, corn oil, cottonseed oil, flaxseed oil, grape seed oil, hemp seed oil, linseed oil, millet seed oil, palm oil, peanut oil, pumpkin seed oil, rapeseed oil, rice bran oil, rye germ oil, safflower oil, sesame oil, soybean oil, spelt germ oil, sunflower oil, or a mixture of any of the aforesaid.
Embodiment 22: The method of any one of embodiments 1 to 21, wherein said oil preparation is soybean oil, sunflower oil, rapeseed oil, canola oil, corn oil, or wheat germ oil.
Embodiment 23: The method of any one of embodiments 1 to 22, wherein said oil preparation is a food grade and/or feed grade oil preparation.
Embodiment 24: The method of any one of embodiments 1 to 23, wherein said oil preparation does not comprise a mineral oil.
Embodiment 25: The method of any one of embodiments 1 to 24, wherein step (a) comprises contacting said oil preparation and said solidifier composition for a time of from 1 hour to 7 days.
Embodiment 26: The method of any one of embodiments 1 to 25, wherein step (a) comprises contacting said oil preparation and said solidifier composition at a temperature of from 10°C to 80°C .
Embodiment 27: The method of any one of embodiments 1 to 26, wherein step (a) comprises stirring the admixture of said oil preparation and said solidifier composition.
Embodiment 28: The method of any one of embodiments 1 to 27, wherein step (b) comprises at least partially inactivating and/or removing said microorganism from said solidified oil preparation.
Embodiment 29: The method of any one of embodiments 1 to 28, wherein step (b) comprises at least one of decanting, centrifuging, filtering, distilling, and extracting. Embodiment 30: A solidified oil preparation obtained or obtainable according to the method of any one of embodiments 1 to 29.
Embodiment 31: A method of producing a consumable selected from the group consisting of a foodstuff, a food supplement, a confectionary, a pet food, a feed, a pharmaceutical or veterinary preparation, a cosmetic preparation, or a precursor of any of the aforesaid, said method comprising admixing a solidified oil preparation produced or producible according to the method of any one of embodiments 1 to 30 or a product thereof to said consumable or precursor thereof.
Embodiment 32: A consumable comprising a solidified oil preparation according to embodiment 30 and/or obtained or obtainable by the method according to embodiment 31.
Embodiment 33: A detergent comprising, preferably consisting of, a solidified oil preparation according to embodiment 30.
Embodiment 34: A microorganism, preferably an isolated microorganism isolated from its natural environment, being Lentilactobacillus parabuchneri LCT659, deposited at the DSMZ under accession number DSM 34334 on 22 July 2022, Lentilactobacilllus parabuchneri LTC 403, deposited at the DSMZ under accession number DSM 34333 on 21 July 2022, or Nakazawea molendinolei L115, deposited at the DSMZ under accession number DSM 34335 on 21 July 2022.
Embodiment 35: A composition comprising at least one microorganism according to embodiment 34.
Embodiment 36: The composition of embodiment 35, wherein said composition is a starter culture and/or a solidifier composition.
Embodiment 37: The composition of embodiment 36 being a solidifier composition, wherein said solidifier composition has at least one feature of any one of embodiments 11 to 15.
Embodiment 38: A lipase produced by a microorganism according to embodiment 34.
Embodiment 39: Use of a microorganism in the production of a solidified oil preparation.
Embodiment 40: Use of a microorganism according to embodiment 34, a composition according to any one of embodiments 35 to 37, and/or a lipase according to embodiment 38, for hydrolyzing triglycerides, preferably in an oil preparation.
Embodiment 41: Use of a microorganism according to embodiment 34, a composition according to any one of embodiments 35 to 37, and/or a lipase according to embodiment 38, for increasing viscosity in an oil preparation.
Embodiment 42: A method for hydrolyzing a triglyceride, preferably in an oil preparation, comprising
   (A) contacting said oil preparation with a microorganism according to embodiment 34, a composition according to any one of embodiments 35 to 37, and/or a lipase according to embodiment 38, and
   (B) thereby hydrolyzing said triglyceride.
Embodiment 43: A method for increasing viscosity in an oil preparation, comprising
   (I) contacting said oil preparation with a microorganism according to embodiment 34, a composition according to any one of embodiments 35 to 37, and/or a lipase according to embodiment 38, and
   (II) thereby increasing viscosity in said oil preparation.
Embodiment 44: The subject matter of any one of embodiments 39 to 43, wherein said microorganism has at least one feature specified in any one of embodiments 2 to 10.
Embodiment 45: The subject matter of any one of embodiments 39 to 44, wherein said microorganism is a microorganism according to embodiment 34.

All references cited in this specification are herewith incorporated by reference with respect to their entire disclosure content and the disclosure content specifically mentioned in this specification.

### Figure legends

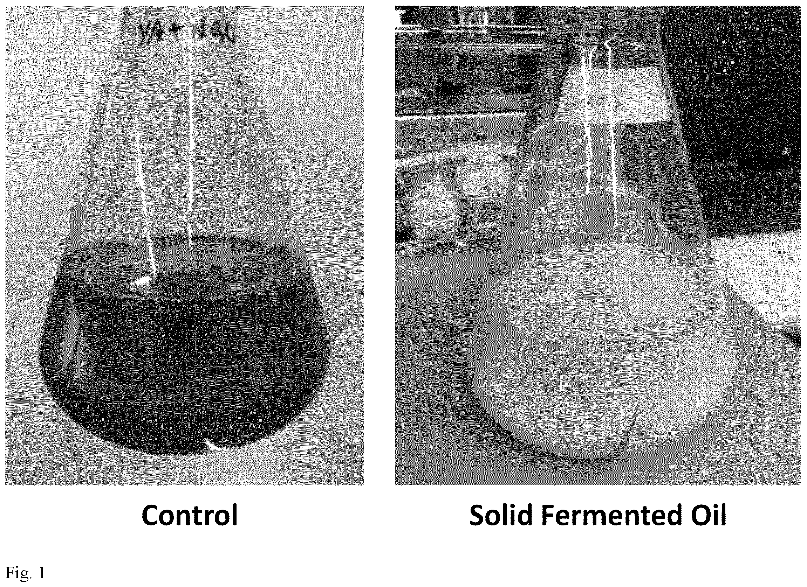

Fig. 1: Examplary photographs of control (left), consisting of wheat germ oil with uninoculated YA Medium; and Solid Fermented Oil (right), produced by fermenting wheat germ oil and YA medium for 4 days with Nakazawaea molendiniolei L115. Cracks in the bottom of the solid fermented oil sample are caused by the shaking of the flasks.

The following Examples shall merely illustrate the invention. They shall not be construed, whatsoever, to limit the scope of the invention.

### Example 1: Preparation of fermented Oil Samples

Food-grade micro-organisms with a Long History of Safe Use (Bourdichon, F., et al (2022) Bull. Int. Dairy Fed. 514) were selected from a culture collection. Moreover, microorganisms were isolated from cold-pressed food-grade vegetable oils. These microorganisms were cultivated in YDA medium: 25 g/l yeast extract (Ohly^{®} PTU), 20 g/l D(+)-Glucose-Monohydrate, 5 g/l sodium acetate, 2 g/l di-ammonium hydrogen citrate, 2 g/l di-potassium hydrogen phosphate, 0.1 g/l magnesium sulfate 7×H₂O, 0.05 g/l Mangan (II)sulfate 1×H₂O. Cells were cultivated for 48 hours at 37°C.

16 ml of this preculture was used to inoculate the main culture containing 800ml YA medium (= YDA medium without glucose). Direct after inoculation 800 ml organic Wheat Germ Oil (Supplier: Henry Lamotte Oils) was added. The oil fermentation was then carried out in closed 2 liter Schott-flasks for 96 hours at 37°C under mild shaking (80 rpm). At the end of fermentation, the water phase (bottom layer) was removed.

### Example 2: Screening of fermented vegetable oils for solidified oil formation

Fermented oil samples (prior to removal of the water phase) were inspected for the presence of solidified fermented oil - see Figure 1. More specifically, it was evaluated whether the fermented oil could be poured out of the flask in which it was produced. Results are shown in Table 1.

**Table 1: Presence of solidified fermented oil after 4 days fermentation of wheat germ oil at 37°C. - indicates no formation of solidified fermented oil, increasing numbers of + signs indicate increasing amounts of solidified oil.**

| **Fermented Wheat Germ Oil samples produced with** | **Presence of Solidified fermented oil** |
|---|---|
| *Lactobacillus delbrueckii* LCT41 | - |
| *Lentilactobacillus parabuchneri* LCT403 (DSM 34333) | + |
| *Lentilactobacillus parabuchnerii* LCT659 (DSM 34334) | +++ |
| *Lactobacillus johnsonii* LCT986 (DSM33691) | + |
| *Lactobacillu johnsonii* LCT989 | - |
| *Lacticaseibacillus casei* LCT1331 | - |
| *Furfurilactobacillus rossiae* LCT1431 | +/- |
| *Lactobacillus gasseri* LCT1663 | +/- |
| *Companilactobacillus farciminis* LCT1923 | +/- |
| *Companilactobacillus farciminis* LCT2023 | +/- |
| *Levilactobacillus hammesii* L10 | - |
| *Nakazawaea moledini-olei* L115 (DSM 34335) | +++ |
| Negative control (unfermented Oil) | - |

### Example 3: Viscosity of fermented oil samples

The viscosity of the fermented oil samples (after removal of the water phase) was determined with an Anton Paar MCR 102 rheometer with a PP50 50mm parallel plate geometry. An appropriate amount of sample was spooned on to the bottom rheometer plate and the upper plate was lowered to a gap of 0.5 mm, and the excess was trimmed using a spatula. After a 60 second wait, a flow curve was performed over a shear rate range of 1 s⁻¹ to 100 s⁻¹. Each sample was measured in duplicate. The average value is shown in Table 2.

**Table 2: Viscosity of the fermented oil samples**

| **Fermented Wheat Germ Oil samples produced with** | **Average viscosity (mPa s)** |
|---|---|
| *Lactobacillus delbrueckii* LCT41 | 192 |
| *Lentilactobacillus parabuchneri* LCT403 (DSM 34333) | 2385 |
| *Lentilactobacillus parabuchnerii* LCT659 (DSM 34334) | 4187 |
| *Lactobacillu johnsonii* LCT989 | 277 |
| *Lacticaseibacillus casei* LCT1331 | 264 |
| *Furfurilactobacillus rossiae* LCT1431 | 463 |
| *Lactobacillus gasseri* LCT1663 | 937 |
| *Companilactobacillus farciminis* LCT1923 | 1205 |
| *Companilactobacillus farciminis* LCT2023 | 936 |
| Negative control (unfermented Oil) | 501 |

### Example 4: Glyceride composition of the fermented oils

The glyceride composition of the fermented oil samples was analyzed conform ISO method 18395). Results are shown in Table 3.

**Table 3: Presence of the indicated glycerides in solidified fermented oil after 4 days fermentation of wheat germ oil at 37°C.**

| **Fermented Wheat Germ Oil samples produced with Wheat Germ Oil - batch 1** | **Concentration (g/100 gr)** | | |
|---|---|---|---|
| | **Monoglyceride s** | **Diglyceride s** | **Triglyceride s** |
| *Lentilactobacillus parabuchneri* LCT403 (DSM 34333) | 0.7 | 11.2 | 84.1 |
| *Lactobacillus johnsonii* LCT986 (DSM33691) | 4.7 | 27.1 | 43.4 |
| *Furfurilactobacillus rossiae* LCT1431 | 0.6 | 11.5 | 83.7 |
| *Lactobacillus gasseri* LCT1663 | 0.6 | 11.3 | 83.5 |
| *Companilactobacillus farciminis* LCT1923 | 0.6 | 11.2 | 83.8 |
| *Companilactobacillus farciminis* LCT2023 | 0.6 | 11.0 | 83.6 |
| Negative control (unfermented Oil) | 0.7 | 11.7 | 83.5 |
| | | | |

| **Wheat Germ Oil - batch 2** | | | |
|---|---|---|---|
| *Lentilactobacillus parabuchnerii* LCT659 (DSM 34334) | 0.3 | 9.0 | 30.2 |
| *Lactiplantibacillus plantarum* LCT1308 | 0.1 | 3.7 | 72.9 |
| *Levilactobacillus hammesii* L10 | 0.1 | 3.3 | 56.6 |
| Negative control (unfermented Oil) | <0.1 | 3.6 | 76.5 |

### Literature cited:

Bourdichon et al., Bulletin of the International Dairy Federation 495/2018
Bourdichon, F., et al (2022) Bull. Int. Dairy Fed. 514
S. Brahmini, Master Thesis at the Oran University, Algeria, 2015). Guan et al. (2020 Chandra et al. (2020), Microb Cell Fact 19:169
Jarvis and Moore (Timmis (ed), Handbook of Hydrocarbon and Lipid Microbiology, Springer Verlag Berlin Heidelberg 2010
Koidis et al. (2008), Eur J Lipid Sci Technol 110:164
Ribes et al. (2018), Crit Rev Food Sci Nutr 58(12):2002
US 5,989,892 A
WO 2019/235761 A1

## Claims

1. A method of producing a solidified oil preparation from an oil preparation, comprising
(a) contacting said oil preparation, preferably under microaerobic or anaerobic conditions, to a solidifier composition comprising at least one microorganism, and
(b) obtaining the solidified oil preparation produced in step (a).

2. The method of claim 1, wherein said microorganism causes the viscosity of the oil preparation to increase during said contacting by a factor of at least 2, preferably at least 3, more preferably at least 4, preferably compared to the oil preparation used as an educt in the method.

3. The method of claim 1 or 2, wherein said microorganism produces at least one diacylglyceride and/or at least one monoacylglyceride from constituents of said oil preparation.

4. The method of any one of claims 1 to 3, wherein said microorganism produces at least one lipase, preferably at least one glycerol ester hydrolase, more preferably at least one triacylglycerol acylhydrolase and/or at least one diacylglycerol acylhydrolase.

5. The method of any one of claims 1 to 4, wherein said microorganism is Lentilactobacillus parabuchneri LCT659, deposited at the DSMZ under accession number DSM 34334 on 22 July 2022, Lentilactobacilllus parabuchneri LTC 403, deposited at the DSMZ under accession number DSM 34333 on 21 July 2022, Lactobacillus johnsonii LCT 986, available at the DSMZ under accession number DSM33691, deposited 12 November 2020, or Nakazawea molendinolei L115, deposited at the DSMZ under accession number DSM 34335 on 21 July 2022.

6. The method of any one of claims 1 to 5, wherein said microorganism is a food- and/or feed-grade microorganism.

7. The method of any one of claims 1 to 6, wherein said solidifier composition further comprises a nutrient medium.

8. The method of any one of claims 1 to 7, wherein said solidified oil preparation comprises an emulsion, a diacylglyceride, a monoacylglyceride, a fat, and/or a wax not present in the oil preparation.

9. The method of any one of claims 1 to 8, wherein said oil preparation is a vegetable oil preparation.

10. The method of any one of claims 1 to 10, wherein said oil preparation is soybean oil, sunflower oil, rapeseed oil, canola oil, corn oil, or wheat germ oil.

11. The method of any one of claims 1 to 10, wherein step (b) comprises at least one of decanting, centrifuging, filtering, distilling, and extracting.

12. A solidified oil preparation obtained or obtainable according to the method of any one of claims 1 to 11.

13. A consumable comprising a solidified oil preparation according to claim 12.

14. A microorganism, preferably an isolated microorganism isolated from its natural environment, being Lentilactobacillus parabuchneri LCT659, deposited at the DSMZ under accession number DSM 34334 on 22 July 2022, Lentilactobacilllus parabuchneri LTC 403, deposited at the DSMZ under accession number DSM 34333 on 21 July 2022, or Nakazawea molendinolei L115, deposited at the DSMZ under accession number DSM 34335 on 21 July 2022.

15. A lipase produced by a microorganism according to claim 14.
